(19) Europäisches Patentamt

European Patent Office

Office européen des brevets

(11) Numéro de publication : **0 452 175 A1**

(12) **DEMANDE DE BREVET EUROPEEN**

(21) Numéro de dépôt : **91400763.8**

(22) Date de dépôt : **21.03.91**

(51) Int. Cl.⁵ : **H01H 57/00, H01H 41/08, G01R 15/02**

(30) Priorité : **13.04.90 FR 9004799**

(43) Date de publication de la demande :
**16.10.91 Bulletin 91/42**

(84) Etats contractants désignés :
**CH DE ES GB LI SE**

(71) Demandeur : **TELEMECANIQUE**
**43-45, Boulevard Franklin Roosevelt**
**F-92500 Rueil Malmaison (FR)**

(72) Inventeur : **Robert, Jacques**
**2, rue de la Farandole, Vaureal**
**F-95000 Cergy (FR)**

(74) Mandataire : **Marquer, Francis et al**
**Cabinet Moutard 35, Avenue Victor Hugo**
**F-78960 Voisins le Bretonneux (FR)**

(54) Relais électronique de protection pour charge électrique polyphasée.

㉗ Ce relais comprend, dans un boîtier (30), un organe détecteur (10) par phase délivrant un signal image du carré de l'intensité du courant dans la phase, et un circuit électronique de traitement (31) qui reçoit et traite les signaux fournis par les organes détecteurs pour délivrer un signal de déclenchement. Chaque organe détecteur (10) comporte un circuit magnétique formé d'une armature fixe (11) et d'une armature mobile (12), toutes deux identiques en forme de L et montées tête-bêche ; un enroulement électrique (20) bobiné autour de la grande branche du L de l'armature fixe (11) et parcouru par le courant de phase ; et une lame piézoélectrique (22) placée en appui contre les deux petites branches appartenant respectivement aux deux armatures en L et soumise à une force de compression lors de l'attraction de l'armature mobile (12) par l'armature fixe (11).

FIG.4

EP 0 452 175 A1

La présente invention concerne un relais électronique de protection associable à une charge électrique polyphasée pour couper l'alimentation de celle-ci lorsqu'il se produit une surcharge de courant sur au moins une phase ou un déséquilibre entre les courants de phase.

Pour protéger des moteurs polyphasés, on sait utiliser des relais électroniques du type comportant pour chaque phase un organe détecteur tel qu'un transformateur d'intensité délivrant un signal image de l'intensité du courant dans la phase, ainsi qu'un circuit électronique de traitement qui reçoit et traite les signaux fournis par les organes détecteurs pour délivrer un signal de déclenchement.

Or, comme cela est bien connu, les échauffements du moteur sont proportionnels au carré du courant de phase ; en conséquence, le fait de mettre en oeuvre des organes détecteurs délivrant chacun un signal image uniquement du courant absorbé par le moteur conduit à prévoir des moyens électroniques supplémentaires aptes à traiter ce signal pour qu'il donne une image représentative des surcharges thermiques par une élévation au carré du courant détecté, ce qui complique le circuit de traitement utilisé.

L'invention a pour but d'associer au circuit de traitement d'un relais électronique de protection associable à une charge polyphasée telle qu'un moteur, des organes détecteurs de courant qui fournissent chacun un signal directement image du carré de l'intensité du courant de phase et qui présentent une structure simple, compacte et peu encombrante.

A cet effet, l'invention a pour objet un relais électronique de protection associable à une charge électrique polyphasée pour protéger celle-ci en cas de surcharge de courant sur au moins une phase ou de déséquilibre entre courants de phase, ce relais comprenant dans un boîtier :

– un organe détecteur par phase pour délivrer un signal dépendant de l'intensité du courant de phase,

– un circuit électronique de traitement qui reçoit et traite les signaux fournis par les organes détecteurs, ce circuit comprenant une logique apte à délivrer un signal de déclenchement.

Selon l'invention, ce relais est plus particulièrement caractérisé en ce que chaque organe détecteur comporte :

– un circuit magnétique formé de deux armatures coopérantes, respectivement fixe et mobile, qui sont identiques et ont une forme de L dont l'une des branches est notablement plus longue que l'autre, et qui sont montées tête-bêche pour former entre elles une cavité rectangulaire, les extrémités associées des deux armatures étant situées en regard l'une de l'autre avec un même entrefer de manière que le sens de déplacement de l'armature mobile soit parallèle à la branche la plus longue du L de l'armature fixe,

– un enroulement électrique bobiné autour de la branche la plus longue du L de l'armature fixe et parcouru par le courant de phase qui induit un champ magnétique provoquant l'attraction de l'armature mobile par l'armature fixe,

– une lame piézoélectrique logée à l'intérieur de la cavité en s'étendant parallèlement aux branches respectives les plus longues des deux armatures en L, montée en appui contre les deux branches respectives les plus courtes desdites armatures en L et interposée entre deux plaquettes isolantes comblant la cavité, ladite lame piézoélectrique étant soumise à une force de compression lors de l'attraction de l'armature mobile par l'armature fixe et étant électriquement reliée au circuit de traitement pour lui transmettre un signal analogique.

D'autres caractéristiques et avantages de l'invention apparaîtront mieux dans la description détaillée qui suit et se réfère aux dessins annexés donnés uniquement à titre d'exemple et dans lesquels :

La figure 1 est une vue en perspective éclatée d'un organe détecteur appartenant au relais électronique selon l'invention ;

La figure 2 est une vue en coupe longitudinale de cet organe détecteur ;

La figure 3 est une vue en perspective de la lame piézoélectrique appartenant à l'organe détecteur ; et

La figure 4 est une vue schématique en élévation du relais électronique selon l'invention.

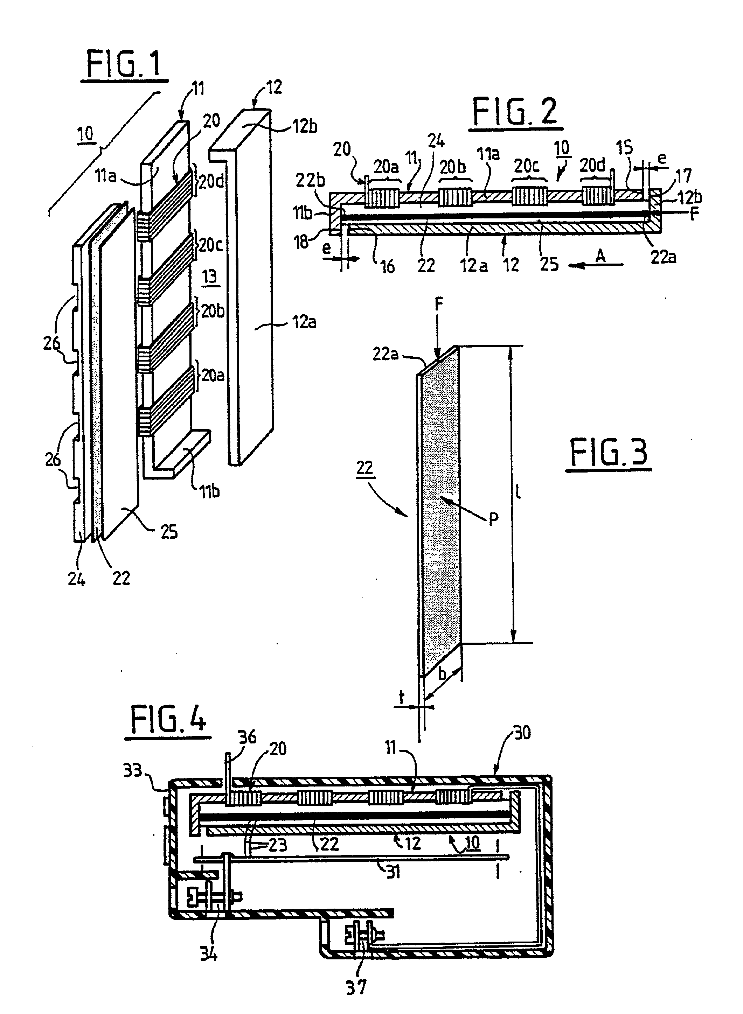

L'organe détecteur 10 illustré sur les figures 1 et 2 et destiné à être associé à une phase d'une charge électrique polyphasée telle qu'un moteur, se compose d'un circuit magnétique formé d'une armature fixe 11 et d'une armature mobile en translation 12 qui sont toutes deux identiques et ont une forme de L dont la branche ou aile longitudinale 11a, respectivement 12a, est notablement plus longue que la branche ou aile transversale 11b, respectivement 12b.

Ces deux armatures 11, 12 en L sont disposées tête-bêche, c'est-à-dire parallèlement l'une à l'autre et en sens inverse, pour former entre elles une cavité rectangulaire 13 (figure 1) et sont agencées de façon complémentaire d'une manière telle que les deux faces terminales 15, 16 de leurs deux branches longitudinales respectives 11a, 12a soient situées respectivement, avec le même entrefer prédéterminé e, en regard des deux faces internes 17, 18 de leurs deux branches transversales respectives 11b, 12b, voir figure 2. Dans cette configuration, figure 2, l'armature mobile 12 en L est à sens de déplacement longitudinal, figuré par la flèche A, comme on le verra plus loin.

Comme le montrent les figures 1 et 2, un enroulement électrique 20 parcouru par le courant de phase est bobiné autour de la branche longitudinale 11a de l'armature fixe 11 en L, par exemple en quatre sections 20a, 20b, 20c et 20d.

A l'intérieur de la cavité rectangulaire 13 (figure 1) formée par les deux armatures 11, 12 en L est logée une lame rectangulaire piézoélectrique 22 qui s'étend parallèlement aux deux branches longitudinales 11a, 12a des deux armatures respectives 11, 12 en L et qui est montée en appui par ses deux faces latérales 22a, 22b respectivement contre les deux faces internes 17, 18 des deux branches transversales respectives 11b, 12b des deux armatures (figure 2). La lame piézoélectrique 22 est métallisée sur ses deux faces longitudinales et est électriquement reliée par des fils de connexion 23, visibles à la figure 4, au circuit électronique de traitement prévu dans le relais.

La lame piézoélectrique 22 est, de préférence, une céramique telle que le zirconate titanate de plomb connu sous la marque PZT, qui est polarisée par application d'un fort champ électrique.

Comme le montre la figure 3, le sens de la force mécanique F exercée sur la face latérale 22a de la lame piézoélectrique 22 est perpendiculaire au sens du champ électrique de polarisation noté P. Une telle lame piézoélectrique est alors dite à effet transversal et présente ainsi l'avantage d'avoir un facteur de transformation piézoélectrique qui peut être augmenté par modification des dimensions de la lame, ce qui permet d'accroître la sensibilité de la lame piézoélectrique.

A cet effet, on rappellera que le facteur connu de transformation piézoélectrique noté w d'une telle lame piézoélectrique à effet transversal est défini par :

$$w = k \sqrt{\frac{C}{C^*}}$$

où : k est le facteur de couplage transversal du matériau

C est la capacité électrique de la lame piézoélectrique et est égale à $\varepsilon_o \, \varepsilon_r \, \dfrac{1.b}{t}$ avec : $\varepsilon_o$ la constante diélectrique du vide ($\varepsilon_o$ = 8, 8 5 pF/m) ; $\varepsilon_r$ la constante diélectrique du matériau ; 1, b, t respectivement la longueur, la largeur et l'épaisseur de la lame

C* est la raideur élastique de la lame piézoélectrique et est égale à $E \dfrac{t.b}{1}$ avec E le module d'élasticité du matériau.

A titre uniquement d'exemple, en donnant à la lame piézoélectrique 22 à effet transversal une longueur 1 égale à 30 millimètres, une largeur b égale à 12 millimètres et une épaisseur t égale à 0,1 millimètre, et en choisissant comme matériau le zirconate titanate de plomb à caractéristiques données, on obtient un facteur de transformation piézoélectrique w élevé, de l'ordre de 150 nCb/N.

La cavité rectangulaire 13 de la figure 1 est par ailleurs comblée par deux plaquettes isolantes 24, 25 disposées longitudinalement en support de part et d'autre de la lame piézoélectrique 22, voir figure 2 ; la plaquette 24 présente sur sa face opposée à la lame piézoélectrique des crans 26 (figure 1), ici au nombre de quatre, dans lesquels sont engagées les portions correspondantes des quatre sections 20a, 20b, 20c, 20d de l'enroulement 20.

L'organe détecteur 10 décrit ci-dessus en relation aux figures 1 à 3 et associé à une phase d'une charge polyphasée telle qu'un moteur fonctionne de la façon suivante :

Le courant de phase parcourant l'enroulement 20 crée une induction magnétique B dans le circuit magnétique formé par les deux armatures 11,12 en L ; cette induction $B = \dfrac{\mu_o \, NI}{e}$ où $\mu_o$ est la perméabilité relative de l'air, NI les ampères-tours circulant dans l'enroulement et e, l'entrefer, tend à attirer l'armature mobile 12 vers l'armature fixe 11, en réduisant l'entrefer e, suivant le sens de déplacement longitudinal représenté par la flèche A sur la figure 2.

Lors de cette attraction de l'armature mobile 12 par l'armature fixe 11, ladite armature mobile 12 exerce sur la lame piézoélectrique 22 une force de compression transversale $F = \dfrac{B^2 \, S}{2 \, \mu_o}$ où B est l'induction magnétique et S la section de l'armature, les plaquettes isolantes , 24 empêchant tout flambage de la lame piézoélectrique 22 lors de la déformation de celle-ci. La force de compression F peut alors s'écrire $F = \dfrac{\mu_o \, N^2 \, I^2 \, S}{2 \, e^2}$ et est donc proportionnelle au carré du courant, de sorte que la lame piézoélectrique 22 délivre un signal analogique directement image du carré de l'intensité du courant dans la phase.

Par ailleurs, du fait que la lame piézoélectrique 22 peut présenter, comme on l'a vu précédemment, un facteur de transformation piézoélectrique élevé grâce à l'effet transversal de ladite lame, le signal analogique fourni par la lame piézoélectrique est un signal de forte amplitude ; dans ces conditions, l'organe détecteur 10 fournit le signal de mesure et, avantageusement, la puissance d'alimentation des circuits électroniques associés de traitement de ce signal.

En outre, de par sa structure même, un tel organe détecteur 10 présente l'avantage de ne créer aucun échauffement, contrairement aux détecteurs thermiques qu'on sait utiliser pour des relais électroniques.

La figure 4 illustre un mode de réalisation du relais électronique de protection d'un moteur, qui est doté d'organes détecteurs du type décrit ci-dessus. Ce relais présente un boîtier 30 dans lequel sont logés, par exemple, trois organes détecteurs 10 dont un seul a été représenté sur la figure 4 et qui sont associés chacun à une phase, ainsi qu'une carte de traitement 31 portant le circuit de traitement électronique relié à chacun des organes détecteurs via les fils de connexion 23 des lames piézoélectriques 22.

La carte de traitement 31 porte également, d'une part, des éléments de réglage communiquant avec des organes de réglage et de signalisation prévus sur la face avant 33 du boîtier 30, d'autre part, des relais de sortie reliés via des bornes 34 à des organes extérieurs de signalisation ou de commande.

Des bornes de puissance 36, 37 relient les extrémités respectives des enroulements 20 au circuit d'alimentation du moteur.

Bien entendu, le relais électronique peut être agencé différemment. Il peut, en particulier, être inclus dans un appareil de protection assurant diverses fonctions, notamment celles de contacteur et/ou de disjoncteur.

## Revendications

1. Relais électronique de protection associable à une charge électrique polyphasée pour protéger celle-ci en cas de surcharge de courant sur au moins une phase ou de déséquilibre entre courants de phase, ce relais comprenant dans un boîtier (30) :

    – un organe détecteur (10) par phase pour délivrer un signal dépendant de l'intensité du courant de phase,

    – un circuit électronique de traitement ( 31 ) qui reçoit et traite les signaux fournis par les organes détecteurs, ce circuit comprenant une logique apte à délivrer un signal de déclenchement,

    caractérisé en ce que chaque organe détecteur (10) comporte :

    – un circuit magnétique formé de deux armatures coopérantes, respectivement fixe (11) et mobile (12), qui sont identiques et ont une forme de L dont l'une des branches est notablement plus longue que l'autre, et qui sont montées tête-bêche pour former entre elles une cavité rectangulaire (13), les extrémités associées (15, 17 ; 16, 18) des deux armatures (11, 12) étant situées en regard l'une de l'autre avec un même entrefer (e) de manière que le sens de déplacement de l'armature mobile (12) soit parallèle à la branche la plus longue (11a) du L de l'armature fixe (11),

    – un enroulement électrique (20) bobiné autour de la branche la plus longue (11a) du L de l'armature fixe (11) et parcouru par le courant de phase qui induit un champ magnétique provoquant l'attraction de l'armature mobile (12) par l'armature fixe (11),

    – une lame piézoélectrique (22) logée à l'intérieur de la cavité en s'étendant parallèlement aux branches respectives les plus longues (11a, 12a) des deux armatures (11, 12) en L, montée en appui contre les deux branches respectives les plus courtes (11b, 12b) desdites armatures en L et interposée entre deux plaquettes isolantes (24, 25) comblant la cavité, ladite lame piézoélectrique (22) étant soumise à une force de compression lors de l'attraction de l'armature mobile par l'armature fixe et étant électriquement reliée au circuit de traitement (31) pour lui transmettre un signal analogique.

2. Relais selon la revendication 1, caractérisé en ce que la lame piézoélectrique (22) est en céramique ferroélectrique et à effet piézoélectrique du type transversal.

FIG.1

FIG.2

FIG.3

FIG.4

Office européen
des brevets

**RAPPORT DE RECHERCHE EUROPEENNE**

Numero de la demande

EP    91 40 0763

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-107059 (GENERAL ELECTRIC COMPANY)<br>* page 1, ligne 1 - page 3, ligne 10; figure 1 *<br>--- | 1 | H01H57/00<br>H01L41/08<br>G01R15/02 |
| A | US-A-4500838 (M.D.BLOOMER)<br>* colonne 1, ligne 5 - colonne 2, ligne 58;<br>figure 2 *<br>--- | 1 | |
| A | EP-A-221185 (KIM)<br>* page 1, ligne 8 - page 2, ligne 5; figure 2 *<br>----- | 1 | |

**DOMAINES TECHNIQUES RECHERCHES (Int. Cl.5 )**

H01H
H01L
G01R
H02H
H02N

Le présent rapport a été établi pour toutes les revendications

| Lieu de la recherche | Date d'achèvement de la recherche | Examinateur |
|---|---|---|
| BERLIN | 18 JUILLET 1991 | RUPPERT, W |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
 
& : membre de la même famille, document correspondant

EPO FORM 1503 03.82 (P0402)